# EUROPEAN PATENT APPLICATION

(11) **EP 4 227 283 A1**
(43) Date of publication of application: **16.08.2023**
(21) Application number: 21877457.8
(22) Date of filing: 29.09.2021
(51) Int. Cl.: C04B 35/587, B28B 1/30

(54) **METHOD OF MANUFACTURING GREEN SHEET**

(30) Priority: 05.10.2020 JP 2020168589
(71) Applicant: Tokuyama Corporation, Shunan-shi, Yamaguchi 745-8648 (JP)
(72) Inventor: KUSANO, Dai, Shunan-shi, Yamaguchi 745-8648 (JP); GOTOH, Kunihiro, Shunan-shi, Yamaguchi 745-8648 (JP); ARAKI, Yasuhiro, Shunan-shi, Yamaguchi 745-8648 (JP)
(74) Representative: Dehns
(86) International application number: PCT/JP2021/035968
(87) International publication number: WO 2022/075156

(57) **Abstract**

One embodiment of the present invention relates to a method of manufacturing a green sheet, a method of manufacturing a silicon nitride sintered body, or a green sheet molding material. The method of manufacturing the green sheet includes a step of obtaining a silicon nitride water slurry that contains at least silicon nitride, water, and a binder and whose water blending amount is 10 to 70 parts by mass per 100 parts by mass of silicon nitride, a decompression treatment step of decompressing the silicon nitride water slurry to obtain a slurry for green sheet molding, and a sheet molding step of molding the slurry for green sheet molding to obtain a sheet molded body.

## Description

### Technical Field

One embodiment of the present invention relates to a method of manufacturing a green sheet, a method of manufacturing a silicon nitride sintered body, or a green sheet molding material.

### Background Art

A silicon nitride sintered body obtained by sintering a silicon nitride powder at a high temperature is light weight and has higher mechanical strength from normal temperature to high-temperature among various ceramic sintered bodies, has properties such as good chemical resistance, good thermal conductivity, and good electric insulation, and is used as a heat dissipation substrate, a member for abrasion proof, and a high-temperature structure member, for example.

One example of a method of manufacturing a silicon nitride sintered body is a method of baking a sheet molded body referred to as a green sheet. The green sheet is manufactured by molding a silicon nitride slurry in which raw materials such as a silicon nitride powder and a binder are dispersed in a solvent by a doctor blade method, for example.

In manufacture of a green sheet in a conventional doctor blade method, an organic solvent such as toluene or alcohol is used as a solvent of a slurry (for example, Patent Literature 1 and 2) in view of ease of molding and ease of drying, for example. For example, in Patent Literature 1, a slurry containing 70 parts by mass in total of a mixture solution of toluene and ethanol with respect to 100 parts by mass of a mixture powder of silicon nitride and a sintering aid is used to manufacture a green sheet. Further, in Patent Literature 2, a green sheet is manufactured by using a slurry having a solid content concentration of 60%, and ethyl alcohol is mentioned as an example of a solvent.

### Citation List

### Patent Literature

Patent Literature 1: JP 2019-052072 A
Patent Literature 2: JP 2020-093978 A

### Summary of Invention

### Technical Problem

As described above, while an organic solvent has been conventionally used as a solvent of a slurry for manufacturing a green sheet, a manufacturing method with a low environmental load is desired in recent years. The present inventors have attempted to manufacture a green sheet by using, as a solvent of the slurry, water with a lower environmental load than an organic solvent does. However, it was found that when water is used as the solvent, a problem that a number of air bubbles are generated in the obtained green sheet occurs. Further, it was also found that when the green sheet in which a number of air bubbles are generated is baked, defects such as dents or voids occur in the surface of the obtained sintered body, and a problem that a satisfactory sintered body in terms of mechanical properties or electrical properties is not obtained occurs, for example.

In one embodiment of the present invention, a green sheet that reduces an environmental load by using water as a solvent of a slurry and in which generation of air bubbles is reduced is manufactured.

### Solution to Problem

According to earnest studies by the present inventors, it was found that when water is used as a solvent of a slurry, a number of air bubbles generate in the green sheet by a reaction of part of silicon nitride in the slurry with water to generate a gas. After further examination proceeds, it was found that when water is used as a solvent of a slurry, since a binder forms a micelle at mixing of slurry raw materials, and adverse effects are imposed on properties of the obtained sintered body, a decompression treatment step of treating a silicon nitride water slurry under a decompression condition is required for the purposes of breaking the micelle. Meanwhile, it was found that the reaction of silicon nitride and water occurs mainly in the decompression treatment step.

In view of these findings, as a result of examining the composition of a silicon nitride water slurry from which a green sheet can be manufactured by a decompression treatment step in a short period of time for reducing generation of a gas in the decompression treatment step, the present inventors found that air bubbles in the green sheet can be effectively reduced by using a silicon nitride water slurry in which the blending amount of water in the slurry is restricted in a specific range, and completed the present invention.

Configuration examples of the present invention are described below.

One embodiment of the present invention is a method of manufacturing a green sheet including:
a step of obtaining a silicon nitride water slurry that contains at least silicon nitride, water, and a binder and whose water blending amount is 10 to 70 parts by mass per 100 parts by mass of silicon nitride,
a decompression treatment step of decompressing the silicon nitride water slurry to obtain a slurry for green sheet molding, and
a sheet molding step of molding the slurry for green sheet molding to obtain a sheet molded body.

It is preferable that the silicon nitride water slurry further contain an antifoaming agent, the antifoaming agent be a polyether antifoaming agent, and the blending amount of the antifoaming agent be 0.25 to 5.0 parts by mass per 100 parts by mass of silicon nitride.

It is preferable that the decompression treatment be performed at a temperature greater than or equal to 15°C and less than or equal to 55°C.

Further, one embodiment of the present invention is a method of manufacturing a silicon nitride sintered body, the method including a step of baking a green sheet obtained by the manufacturing method of a green sheet at 1500 to 2000°C.

Moreover, one embodiment of the present invention is a green sheet molding material obtained from a silicon nitride water slurry that contains at least silicon nitride, water, and a binder and whose water blending amount is 10 to 70 parts by mass per 100 parts by mass of silicon nitride.

It is preferable that the silicon nitride water slurry contain a polyether antifoaming agent, and a blending amount of the polyether antifoaming agent be 0.25 to 5.0 parts by mass per 100 parts by mass of silicon nitride.

### Advantageous Effects of Invention

According to one embodiment of the present invention, it is possible to manufacture a green sheet in which air bubbles are reduced in manufacturing the green sheet by using water as a solvent of a slurry. By using the green sheet, it is possible to manufacture a silicon nitride sintered body under a manufacturing condition that has a lower environmental load than in a conventional silicon nitride sintered body manufacturing method in which an organic solvent is used as a solvent of a slurry, and to obtain a silicon nitride sintered body having good physical properties.

Further, by using water as a solvent of a slurry, there is an advantage in view of being capable of simplifying manufacturing facilities of a silicon nitride sintered body, since there is no risk such as explosion associated with volatilization of a residual solvent in the subsequent baking step.

### Description of Embodiments

### <<Method of Manufacturing Green Sheet>>

One embodiment of the present invention is a method of manufacturing a green sheet, the method including a step of obtaining a silicon nitride water slurry that contains at least silicon nitride, water, and a binder and whose water blending amount is 10 to 70 parts by mass per 100 parts by mass of silicon nitride, a decompression treatment step of decompressing the silicon nitride water slurry to obtain a slurry for green sheet molding, and a sheet molding step of molding the slurry for green sheet molding to obtain a sheet molded body.

### <Step of Obtaining Silicon Nitride Water Slurry>

The step of obtaining a silicon nitride water slurry is a step of obtaining a silicon nitride water slurry that contains at least silicon nitride, water, and a binder and whose water blending amount is 10 to 70 parts by mass per 100 parts by mass of silicon nitride.

### [Silicon Nitride]

The silicon nitride water slurry contains silicon nitride. It is preferable that a silicon nitride powder be used as a raw material for the silicon nitride water slurry containing silicon nitride.

The silicon nitride powder blended in the silicon nitride water slurry is not particularly limited as long as the substance is a powdery substance represented by a chemical formula Si₃N₄, and a known powder can be used. The silicon nitride powder may be a powder containing α-Si₃N₄ particles or may be a powder containing β-Si₃N₄ particles, and may contain both of them, for example. In particular, it is preferable to use a silicon nitride powder containing greater than or equal to 80% of β-Si₃N₄ particles, particularly, greater than or equal to 90% of β-Si₃N₄ particles.

One kind or two or more kinds of the silicon nitride powder may be blended in the silicon nitride water slurry.

The specific surface area of the silicon nitride powder blended in the silicon nitride water slurry is preferably greater than or equal to 5 m²/g, and preferably less than or equal to 20 m²/g.

When the specific surface area of the silicon nitride powder is less than 5 m²/g, there is a tendency that sintering properties be reduced. Meanwhile, when the specific surface area is more than 20 m²/g, since the silicon nitride powder is likely to react with water and air bubbles are likely to be taken up in the obtained slurry in preparing a slurry described later, and much time is required for defoaming, there is a tendency that consequently an amount of air bubbles in the obtained green sheet is increased.

The specific surface area of the silicon nitride powder is more preferably greater than or equal to 7 m²/g, and more preferably less than or equal to 15 m²/g. Note that the specific surface area in the present specification means a BET specific surface area measured by using the single point BET method by nitrogen gas adsorption.

### [Water]

In the silicon nitride water slurry, water is used as a solvent. By using water as a solvent of the silicon nitride water slurry, it is possible to reduce an environmental load compared to a case of using an organic solvent.

The water is not particularly limited, and tap water may be used, for example. However, it is preferable to use pure water or ion-exchanged water, for example.

The blending amount of water in the silicon nitride water slurry is greater than or equal to 10 parts by mass, preferably greater than or equal to 30 parts by mass and less than or equal to 70 parts by mass, and preferably less than or equal to 50 parts by mass per 100 parts by mass of silicon nitride. By restricting the blending amount of water to less than or equal to 70 parts by mass, it is possible to effectively reduce residual air bubbles in the green sheet.

While the reason why residual air bubbles in the green sheet are reduced when the blending amount of water in the silicon nitride slurry is 10 to 70 parts by mass, as described above, is not clear, the present inventors consider as follows.

That is, it is considered that the concentration of the binder on the surface of the silicon nitride or between silicon nitride molecules is increased, and frequency of contact of silicon nitride and water can be reduced when the blending amount of water in the silicon nitride water slurry containing the binder is restricted to 10 to 70 parts by mass. As a result, it is assumed that it is possible to reduce generation of a gas such as an ammonia gas that is generated by a reaction of silicon nitride and water and to also reduce generation of air bubbles due to generation of the gas.

Further, in the slurry, while a micelle including air bubbles is likely to be formed by binder molecules dispersed in water, and it is required to perform the decompression treatment step for removing the micelle, it is assumed that the generation amount of the micelle can be reduced by restriction of the blending amount of water. It is assumed that it is possible to terminate the decompression treatment step in a shorter time by reducing the generation amount of the micelle, and as a result, it is possible to reduce generation of a gas in the decompression treatment step.

### [Binder]

In the silicon nitride water slurry, a binder is blended. By blending the binder, it is easy to maintain the sheet molded body obtained from the silicon nitride water slurry in a desired shape.

As the binder, it is preferable to use an organic polymer, and polyvinyl alcohol, polyvinyl butyral, methyl cellulose, alginic acid, polyethylene glycol, carboxymethyl cellulose, ethyl cellulose, and acrylic resin may be used, for example.

One kind or two or more kinds of the binder may be blended in the silicon nitride water slurry.

The blending amount of the binder in the silicon nitride water slurry is preferably 1 to 30 parts by mass per 100 parts by mass of silicon nitride, and the blending amount may be appropriately determined in accordance with molding conditions, for example.

### [Additive]

To the silicon nitride water slurry, known additives may be blended as long as effects of the present invention are not inhibited.

One kind or two or more kinds of each of the additives may be blended in the silicon nitride water slurry.

### [Sintering Aid]

It is preferable to compound a sintering aid in the silicon nitride water slurry.

The sintering aid is not particularly limited as long as it is used for sintering the silicon nitride powder. In view of being capable of reducing a decrease in thermal conductivity of the silicon nitride sintered body to be obtained, for example, a compound containing no oxygen atom is particularly suitably used.

As the compound containing no oxygen atom, a carbonitride compound containing a rare-earth element or a magnesium element (the compound is hereinafter also referred to as "specific carbonitride compound") and a nitride compound containing a magnesium element (the compound is hereinafter also referred to as "specific nitride compound") are preferable. By using one or more compounds selected from the group consisting of the specific carbonitride compound and the specific nitride compound as the sintering aid, it is possible to easily obtain a silicon nitride sintered body having high thermal conductivity more effectively. It is considered that the specific carbonitride compound functions as a getter agent that adsorbs oxygen that may be contained in the silicon nitride powder blended in the silicon nitride water slurry, and that the specific nitride compound is capable of reducing the total amount of oxygen in the silicon nitride sintered body. As a result, it is considered that a silicon nitride sintered body having higher thermal conductivity can be obtained by using one or more compounds selected from the group consisting of the specific carbonitride compound and the specific nitride compound.

One kind or two or more kinds of each of the specific carbonitride compound and the specific nitride compound may be used.

As the rare-earth element, yttrium (Y), lanthanum (La), samarium (Sm), cerium (Ce), or ytterbium (Yb) are preferable, for example.

The carbonitride compound containing the rare-earth element may be Y₂Si₄N₆C, Yb₂Si₄N₆C, or Ce₂Si₄N₆C, for example, and in view of being capable of easily obtaining a silicon nitride sintered body having high thermal conductivity, Y₂Si₄N₆C and Yb₂Si₄N₆C are preferable among them.

The carbonitride compound containing a magnesium element may be MgSi₄N₆C, for example.

Further, the nitride compound containing a magnesium element may be MgSiN₂, for example.

Particularly preferred compounds among the specific carbonitride compound and the specific nitride compound are Y₂Si₄N₆C, MgSi₄N₆C, and MgSiN₂.

Further, it is preferable to use a metal oxide as the sintering aid together with the compound containing no oxygen atom. By using a metal oxide as the sintering aid, sintering of silicon nitride easily proceeds, and it is possible to easily obtain a sintered body that is denser and has higher strength.

Examples of the metal oxide include yttria (Y₂O₂), magnesia (MgO), and ceria (CeO₂). Yttria is preferable among these metal oxides.

One kind or two or more kinds of the metal oxide may be used.

When a compound containing no oxygen atom and a metal oxide are used together as the sintering aid, the mass ratio of the compound containing no oxygen atom to the metal oxide (compound containing no oxygen atom/metal oxide) is preferably greater than or equal to 0.2, more preferably greater than or equal to 0.4, still more preferably greater than or equal to 0.6, and preferably less than or equal to 4, more preferably less than or equal to 2.

When the mass ratio is in such a range, it is possible to easily obtain a silicon nitride sintered body that is dense and has high thermal conductivity.

When the sintering aid is blended in the silicon nitride water slurry, the blending amount of the sintering aid in the silicon nitride water slurry is preferably greater than or equal to 5 parts by mass, more preferably greater than or equal to 7 parts by mass, and preferably less than or equal to 20 parts by mass, more preferably less than or equal to 10 parts by mass per 100 parts by mass of silicon nitride.

### [Antifoaming Agent]

In the silicon nitride water slurry, an antifoaming agent may be blended.

By blending the antifoaming agent, it is possible to easily break air bubbles due to a gas generated by a reaction of silicon nitride and water and to reduce generation of air bubbles in the green sheet more reliably. In addition, since air bubbles generated by taking external air in the green sheet manufacturing operation such as stirring or molding are also broken by the antifoaming agent, generation of air bubbles in the green sheet is easily reduced more reliably.

While a known antifoaming agent can be used as the antifoaming agent, a polyether antifoaming agent is suitably used.

Examples of the polyether antifoaming agent include polyoxyalkylenes such as (poly)oxyethylene and (poly)oxypropylene; (poly)oxyalkylene alkyl ethers such as diethylene glycol heptyl ether, polyoxyethylene oleyl ether, polyoxypropylene butyl ether, and polyoxyethylene polyoxypropylene 2-ethylhexyl ether; (poly)oxyalkylene(alkyl)aryl ethers such as polyoxypropylene phenyl ether and polyoxyethylene nonylphenyl ether; acetylene ethers such as 2,4,7,9-tetramethyl-5-decyn-4,7-diol, 2,5-dimethyl-3-hexyn-2,5-diol, and 3-methyl-1-butyn-3-ol; (poly)oxyalkylene fatty acid esters such as diethylene glycol oleate, diethylene glycol laurylate, and ethylene glycol distearate; (poly)oxyalkylene sorbitan fatty acid esters such as polyoxyethylene sorbitan monolaurate and polyoxyethylene sorbitan trioleate; (poly)oxyalkylene alkyl (aryl) ether sulfate ester salts such as polyoxypropylene methyl ether sodium sulfate and polyoxyethylene dodecyl phenol ether sodium sulfate; (poly)oxyalkylene alkyl phosphoric acid esters such as (poly)oxyethylene stearyl phosphoric acid ester; and (poly)oxyalkylene alkyl amines such as polyoxyethylene laurylamine.

When the antifoaming agent is blended in the silicon nitride water slurry, the blending amount of the antifoaming agent is not particularly limited, but is preferably greater than or equal to 0.25 parts by mass, more preferably greater than or equal to 0.5 parts by mass, and preferably less than or equal to 5.0 parts by mass, more preferably less than or equal to 2.0 parts by mass per 100 parts by mass of silicon nitride.

### [Organic Solvent]

While an organic solvent other than water, for example, alcohol may also be used together as a solvent in the silicon nitride water slurry, in view of an environmental load, the blending amount of the organic solvent is preferably as small as possible, and is preferably less than or equal to 50%, more preferably less than or equal to 20%, and still more preferably less than or equal to 1% of the blending amount of the solvent.

### [Method of Manufacturing Silicon Nitride Water Slurry]

The method of manufacturing the silicon nitride water slurry is not particularly limited, and it is preferable that components be measured in a predetermined blending amount, and stirred and mixed so that the silicon nitride powder is dispersed in the solvent. Examples of a dispersing device that is used for stirring and mixing include, for example, an ultrasonic dispersion apparatus, a bead mill, a roll mill, a homomixer, an ultramixer, a disper mixer, a through high-pressure dispersion apparatus, a collision high-pressure dispersion apparatus, a porous high-pressure dispersion apparatus, a debris high-pressure dispersion apparatus, a (collision and penetration) high-pressure dispersion apparatus, and an ultrahigh-pressure homogenizer, for example. Further, after stirring and mixing, a step of performing an operation such as filter filtration to remove coarse particles in the slurry may be performed if necessary.

### <Decompression Treatment Step>

In the decompression treatment step, the silicon nitride water slurry is decompressed to obtain a slurry for green sheet molding.

The decompression treatment step is performed in the presence of the silicon nitride water slurry under a lower decompression condition than the atmospheric pressure (for example, a condition greater than or equal to -0.20 MPa·G, for example, less than or equal to -0.08 MPa·G).

By the decompression treatment step, it is possible to break the micelle of the micellar binder and reduce generation of defects on the surface of the sintered body obtained by baking the green sheet. Further, as described above, it is assumed that since frequency of contact between silicon nitride and water is reduced and the generation amount of the micelle in the slurry is reduced when the amount of water blended in the silicon nitride water slurry is 10 to 70 parts by mass, it is possible to terminate the decompression treatment step in a short period of time and reduce generation of a gas due to a reaction of silicon nitride and water that causes air bubbles in the green sheet.

The pressure of the decompression treatment step is preferably greater than or equal to -0.15MPa·G, and preferably less than or equal to -0.09 MPa·G.

Too low a pressure may cause new air bubbles to be generated by bumping, for example. When the pressure is too high, there is a tendency that it is difficult to break the micelle sufficiently in a short period of time.

The temperature of the decompression treatment step is not particularly limited as long as the silicon nitride water slurry maintains fluidity, but the temperature is preferably greater than or equal to 15°C, more preferably greater than or equal to 20°C, still more preferably greater than or equal to 25°C, and preferably less than or equal to 55°C, more preferably less than or equal to 45°C.

When the temperature of the decompression treatment step is low, while the decompression treatment step is required to be performed for a long period of time since breaking efficiency of the micelle is decreased, it is possible to reduce the generation amount of a gas per unit time due to a decrease in reactivity between silicon nitride and water. Meanwhile, when the temperature of the decompression treatment step is high, while the generation amount of a gas per unit time increases due to an increase in reactivity between silicon nitride and water, it is possible to shorten a period of time of the decompression treatment step. In view of the balance, when the decompression treatment step is performed within the above-mentioned temperature range, it is easily to efficiently reduce generation of air bubbles in the green sheet.

While the preferable period of time of the decompression treatment step depends on the temperature of the decompression treatment, in view of breaking the micelle sufficiently and reducing the gas generation due to a reaction of silicon nitride and water, the period of time is preferably greater than or equal to 1 hour and preferably less than or equal to 5 hours. When the temperature in the decompression treatment is greater than or equal to 25°C, it is particularly preferable that the period of time of the decompression treatment step be less than or equal to 3 hours.

In the decompression treatment step, there is a case where water that is a solvent is removed depending on conditions, and the viscosity of the slurry (slurry for green sheet molding) after the decompression treatment step may be different from that of the silicon nitride water slurry. In such a case, by the decompression treatment step, the micelle is broken, and the viscosity of the slurry for green sheet molding may be adjusted to a viscosity that is suitable for molding.

The viscosity of the slurry for green sheet molding at 23°C is preferably greater than or equal to 1000 mPa·s, more preferably greater than or equal to 3000 mPa·s, and preferably less than or equal to 10000 mPa·s, more preferably less than or equal to 7000 mPa·s, in view of moldability.

Note that the viscosity is a value measured by a rotational viscometer.

The solid content concentration of the slurry for green sheet molding is preferably 65 to 75% in view of moldability and the ease of performing a drying step described later.

### <<Green Sheet Molding Material>>

A green sheet molding material according to one embodiment of the present invention is not particularly limited as long as the material is obtained from the silicon nitride water slurry.

Suitable specific examples of the green sheet molding material include the silicon nitride water slurry and the slurry for green sheet molding.

### <Sheet Molding Step>

While a sheet molding step of molding the slurry for green sheet molding to obtain a sheet molded body is not particularly limited, and known molding methods can be used, it is preferable that molding be performed by the doctor blade method in view of good thickness uniformity of the obtained sheet molded body, for example.

While the sheet molded body obtained by molding as described above may be used as a green sheet, it is preferable to manufacture a green sheet through the drying step of drying the sheet molded body obtained by molding as described above.

The drying step is a step of removing water from the sheet molded body obtained by molding as described above, and it is easy to perform a degreasing step and a baking step described later by performing the drying step.

The drying step can be performed by leaving the sheet molded body standing under a temperature of about 30 to 150°C, for example.

In the drying step, it is preferable to dry the sheet so that the water content of the green sheet to be obtained is less than or equal to 10%.

The obtained green sheet may be processed to an appropriate size and an arbitrary shape, for example, if necessary. Such size and shape are generally a substantially rectangular shape, for example, a shape having a side of 100 to 2000 mm and a thickness of 0.3 to 1.2 mm.

Further, it is preferable that the obtained green sheet be subjected to the degreasing step before the baking step described later if necessary.

One example of the degreasing step is a step of heating the sheet molded body for the purpose of removing an organic substance such as the binder from the green sheet.

The heating temperature in the degreasing step is usually greater than or equal to 300°C, preferably greater than or equal to 400°C, and usually less than or equal to 1200°C, preferably less than or equal to 1000°C.

Further, the heating temperature of the green sheet in the degreasing step can be appropriately selected in accordance with the type of the binder or the degreasing atmosphere, but is usually greater than or equal to 30 minutes, preferably greater than or equal to 2 hours, and usually less than or equal to 140 hours, preferably less than or equal to 120 hours.

The degreasing step is performed under an atmosphere of an oxidizing gas such as oxygen or air, a reducing gas such as hydrogen, an inert gas such as argon or nitrogen, carbon dioxide, or a mixture of these gases, or under an atmosphere of a humidified gas that is a mixture of these gases and water vapor.

### <<Silicon Nitride Sintered Body>>

A silicon nitride sintered body according to one embodiment of the present invention can be obtained by baking the green sheet obtained by the method of manufacturing the green sheet (baking step).

Baking conditions are not particularly limited, and known baking conditions for obtaining the silicon nitride sintered body may be performed.

The baking is usually performed under an inert gas atmosphere. The term "under an inert gas atmosphere" means "under a nitrogen atmosphere or an argon atmosphere", for example.

The baking is preferably performed under an atmosphere where pressure is controlled.

Although the pressure in the baking is not particularly limited, since silicon nitride may be decomposed in baking under low-pressure, and costs for facilities, for example, are high under a high pressure, the pressure is greater than or equal to 0 MPa·G, for example, and less than or equal to 10 MPa·G, for example, preferably less than or equal to 3 MPa·G, and more preferably less than or equal to 0.1 MPa·G.

The baking temperature is not particularly limited as long as a desired sintering reaction proceeds, but the temperature is usually greater than or equal to 1200°C, preferably greater than or equal to 1500°C, and usually less than or equal to 2000°C, preferably less than or equal to 1800°C.

The baking time is not particularly limited as long as a desired sintering reaction proceeds, but the time is generally about 3 to 20 hours.

The silicon nitride sintered body manufactured as described above is a sintered body obtained by using water as a solvent of a slurry used for manufacturing a green sheet, and generation of dents in the surface or internal voids, for example, due to air bubbles generated in manufacturing the green sheet is reduced. Further, such a silicon nitride sintered body in which defects such as dents or voids in the surface are reduced has good physical properties such as mechanical properties and electric properties, for example.

The three-point bending strength (measured according to JIS R 1601) that is an index of mechanical strength of the silicon nitride sintered body is preferably greater than or equal to 500 MPa, more preferably greater than or equal to 550 MPa.

Since the silicon nitride sintered body in which defects such as dents in the surface or internal voids are reduced is likely to be a sintered body whose three-point bending strength is within the above-mentioned range, the silicon nitride sintered body has good product reliability.

The dielectric breakdown voltage of the silicon nitride sintered body is preferably greater than or equal to 11 kV, more preferably greater than or equal to 13 kV.

The silicon nitride sintered body having such a dielectric breakdown voltage hardly causes dielectric breakdown and has good product reliability.

The thermal conductivity of the silicon nitride sintered body is preferably greater than or equal to 60 W/m·K, more preferably greater than or equal to 75 W/m·K.

The thermal conductivity can be measured by the laser flash method.

The use of the silicon nitride sintered body is not particularly limited, and examples of the use include various heat dissipation substrates, power module substrates (for on-vehicle, electric railway, and high power semiconductors), high frequency circuit boards, LED packages, optical pickup sub-mounts (for DVDs and CDs), materials for engines or gas turbines, turbocharger rotors, glow plugs for diesel engines, hot plugs, heater tubes, stalks for low-pressure casting, couple protective tubes, blowing pipes for degassing, heat-resistant and/or impact-resistant members, abrasive cloth dressing plates, high-frequency quenching jigs, jigs for car body assembly and/or engine manufacturing, jigs for pressing processes, insulating parts, insulating medical instruments and/or surgical instruments, and rollers for plastic processing, for example.

### Examples

While one embodiment of the present invention will be specifically described below with reference to examples, the present invention is not limited to these examples. Each test method is as follows.

### <Evaluation of Air Bubbles in Green Sheet>

Surfaces of 10 green sheets (300 mm × 2000 mm × 0.4 mm) whose manufacturing conditions are the same and whose shapes are the same as each other were visually observed, and the number of dents per one sheet (average of the number of dents) was calculated and evaluated by the following evaluation criterion.

### (Evaluation Criterion)

A: the number of dents per one green sheet is less than 10
B: the number of dents per one green sheet is greater than or equal to 10 and less than 20
C: the number of dents per one green sheet is greater than or equal to 20 and less than 30
D: the number of dents per one green sheet is greater than or equal to 30 and less than 40
E: the number of dents per one green sheet is greater than or equal to 40

### <Evaluation of Surface Texture of Sintered Body>

Surfaces of 10 sintered bodies (300 mm × 2000 mm × 0.4 mm) whose manufacturing conditions are the same and whose shapes are the same as each other were visually observed, and the number of dents per one sheet (average of the number of dents) was calculated and evaluated by the following evaluation criterion.

### (Evaluation Criterion)

A: the number of dents per one sintered body is less than 10
B :the number of dents per one sintered body is greater than or equal to 10 and less than 20
C: the number of dents per one sintered body is greater than or equal to 20 and less than 30
D: the number of dents per one sintered body is greater than or equal to 30 and less than 40
E: the number of dents per one sintered body is greater than or equal to 40

Raw materials used for the test and symbols thereof are as follows.
<Silicon Nitride Powder>
   C1: a β-Si₃N₄ powder having a specific surface area of 12 m²/g
<Sintering Aid>
   S1: yttrium oxide (specific surface area: 20 m²/g)
   S2: silicon nitride magnesium (specific surface area: 12 m²/g)
<Binder>
   B1: an acrylic resin emulsion (Acrybase EMK-02 manufactured by Fujikura Kasei Co., Ltd.)
<Antifoaming Agent>
   (polyether antifoaming agent)
   D1: polyoxyalkylene (SN defoamer 485 manufactured by San Nopco Limited)

### <Example 1>

A silicon nitride water slurry was obtained by mixing and stirring 100 g of a silicon nitride powder C1, 5.6 g of a sintering aid S1, 3.4 g of a sintering aid S2, 24 g of a binder B1, 0.5 g of an antifoaming agent D1, and 47 g of water for 48 hours. The obtained silicon nitride water slurry was put into a vessel, and the decompression treatment step was performed under a decompression state of -0.1 MPa·G in the vessel and the silicon nitride water slurry was left standing at 30°C for 2.5 hours to obtain a slurry for green sheet molding. After the obtained slurry for green sheet molding was passed through a polyethylene mesh (opening 229 µm) to remove coarse particles, a sheet molded body of 300 mm × 2000 mm × 0.4 mm was manufactured by the doctor blade method by using the obtained slurry. The obtained sheet molded body was put on a plate heater set at 50°C and left standing for 3 hours for drying to obtain a green sheet. After air bubbles in the obtained green sheet were evaluated, the green sheet was degreased at 500°C for 60 hours, and then baked for 16 hours under a nitrogen atmosphere at 1800°C at 0.1 MPa·G to obtain a silicon nitride sintered body. Then, the surface texture of the obtained silicon nitride sintered body was evaluated. The composition of the silicon nitride water slurry and conditions of the decompression treatment step are shown in Table 1. Evaluation results of the obtained green sheets and silicon nitride sintered bodies are shown in Table 2.

### <Examples 2 to 5 and Comparative Examples 1 to 3>

The same evaluation as that in Example 1 was performed except that the composition of the silicon nitride water slurry and conditions of the decompression treatment step were changed as shown in Table 1. Note that, in Comparative Example 3, the silicon nitride water slurry was not subjected to the decompression treatment step.

The composition of the silicon nitride water slurry and conditions of the decompression treatment step are shown in Table 1. Evaluation results of the obtained green sheets and silicon nitride sintered bodies are shown in Table 2.

**[Table 1]**

| | Composition of silicon nitride water slurry [parts by mass] | | | | | | Conditions of decompression treatment step | | |
|---|---|---|---|---|---|---|---|---|---|
| | Silicon nitride powder | Sintering aid | | Solvent | Binder | Antifoaming agent | Temperature | Pressure | Time |
| | | S1 | S2 | Water | B1 | D1 | | | |
| Example 1 | 100 | 5.6 | 3.4 | 47 | 24 | 0.5 | 30°C | -0.1 MPa·G | 2.5 hours |
| Example 2 | 100 | 5.6 | 3.4 | 30 | 24 | 0.5 | 30°C | -0.1 MPa·G | 2.5 hours |
| Example 3 | 100 | 5.6 | 3.4 | 70 | 24 | 0.5 | 30°C | -0.1 MPa·G | 2.5 hours |
| Example 4 | 100 | 5.6 | 3.4 | 47 | 24 | 2.0 | 30°C | -0.1 MPa·G | 2.5 hours |
| Example 5 | 100 | 5.6 | 3.4 | 47 | 24 | 0.5 | 50°C | -0.1 MPa·G | 2.5 hours |
| Comparative Example 1 | 100 | 5.6 | 3.4 | 93 | 24 | 0.5 | 50°C | -0.1 MPa·G | 5 hours |
| Comparative Example 2 | 100 | 5.6 | 3.4 | 93 | 24 | 0.5 | 30°C | -0.1 MPa·G | 2.5 hours |
| Comparative Example 3 | 100 | 5.6 | 3.4 | 5 | 24 | 0.5 | - | - | - |

**[Table 2]**

| | Evaluation of air bubbles in green sheet | Evaluation of surface texture of sintered body |
|---|---|---|
| Example 1 | B | B |
| Example 2 | B | B |
| Example 3 | C | C |
| Example 4 | A | A |
| Example 5 | C | C |
| Comparative Example 1 | E | E |
| Comparative Example 2 | E | E |
| Comparative Example 3 | Molding impossible | |

In the examples described above, the slurries for green sheet molding obtained by the manufacturing methods of Examples 1 to 5 had a solid content concentration of 65 to 75% and a viscosity at 23°C of 4000 to 6000 mPa·s. Note that the viscosity is a value measured by a rotational viscometer.

In Examples 1 to 5 according to one embodiment of the present invention, the green sheets had less air bubbles than in Comparative Examples 1 and 2 having high water blending amount, and as a result, good sintered bodies were obtained. Note that in Comparative Example 3 having low water blending amount, it was impossible to form a green sheet.

## Claims

1. A method of manufacturing a green sheet comprising:
a step of obtaining a silicon nitride water slurry that comprises at least silicon nitride, water, and a binder and whose water blending amount is 10 to 70 parts by mass per 100 parts by mass of silicon nitride,
a decompression treatment step of decompressing the silicon nitride water slurry to obtain a slurry for green sheet molding, and
a sheet molding step of molding the slurry for green sheet molding to obtain a sheet molded body.

2. The method of manufacturing a green sheet according to claim 1, wherein the silicon nitride water slurry further comprises an antifoaming agent.

3. The method of manufacturing a green sheet according to claim 2, wherein the antifoaming agent is a polyether antifoaming agent.

4. The method of manufacturing a green sheet according to claim 2 or 3, wherein a blending amount of the antifoaming agent is 0.25 to 5.0 parts by mass per 100 parts by mass of silicon nitride.

5. The method of manufacturing a green sheet according to any one of claims 1 to 4, wherein the decompression treatment is performed at a temperature greater than or equal to 15°C and less than or equal to 55°C.

6. A method of manufacturing a silicon nitride sintered body, the method comprising a step of baking a green sheet obtained by the method of manufacturing a green sheet according to any one of claims 1 to 5 at 1500°C to 2000°C.

7. A green sheet molding material obtained from a silicon nitride water slurry that comprises at least silicon nitride, water, and a binder and whose water blending amount is 10 to 70 parts by mass per 100 parts by mass of silicon nitride.

8. The green sheet molding material according to claim 7,
wherein the silicon nitride water slurry comprises a polyether antifoaming agent, and
a blending amount of the polyether antifoaming agent is 0.25 to 5.0 parts by mass per 100 parts by mass of silicon nitride.
